# EUROPÄISCHE PATENTSCHRIFT

(11) **EP 4 314 594 B1**
(45) Veröffentlichungstag und Bekanntmachung des Hinweises auf die Patenterteilung: **27.05.2026**
(21) Anmeldenummer: 22707342.6
(22) Anmeldetag: 24.02.2022
(51) Int. Cl.: F16F 15/139, F16F 15/131, F16F 15/14

(54) **DREHMOMENTÜBERTRAGUNGSVORRICHTUNG FÜR EINEN ANTRIEBSSTRANG EINES KRAFTFAHRZEUGS**
TORQUE TRANSMISSION DEVICE FOR A DRIVE TRAIN OF A MOTOR VEHICLE
DISPOSITIF DE TRANSMISSION DE COUPLE POUR UNE CHAÎNE CINÉMATIQUE D'UN VÉHICULE À MOTEUR

(30) Priorität: 26.03.2021 DE 102021107697
(43) Veröffentlichungstag der Anmeldung: 07.02.2024
(73) Patentinhaber: Schaeffler Technologies AG & Co. KG, 91074 Herzogenaurach (DE)
(72) Erfinder: FRANZ, Evgenij, 76437 Rastatt (DE)
(74) Vertreter: Schaeffler Technologies
(86) Internationale Anmeldenummer: PCT/DE2022/100151
(87) Internationale Veröffentlichungsnummer: WO 2022/199741

(56) Entgegenhaltungen:
- DE-A1- 102010 054 255
- DE-A1- 102014 224 064
- DE-A1- 102019 128 148
- DE-B4- 102016 204 261
- DE-U1- 202020 102 864

## Beschreibung

Die vorliegende Erfindung betrifft eine Drehmomentübertragungsvorrichtung für einen Antriebsstrang eines Kraftfahrzeugs.

Aus der DE 10 2019 120 220 A1 ist eine Drehmomentübertragungsvorrichtung für einen Antriebsstrang eines Kraftfahrzeugs bekannt mit einer eingangsseitigen Drehschwingungsdämpfereinrichtung, einer nachfolgenden Drehmomentbegrenzungseinrichtung und einer nachfolgenden Fliehkraftpendeleinrichtung, deren Eingangsseite mit einer Ausgangsseite der Drehmomentbegrenzungseinrichtung drehfest verbunden ist.

Aus der DE 10 2019 128 148 A1 ist eine Drehmomentübertragungsvorrichtung für einen Antriebsstrang eines Kraftfahrzeugs bekannt, die auf den Oberbegriff des Anspruchs 1 lesbar ist.

Es ist Aufgabe der vorliegenden Erfindung, eine Drehmomentübertragungsvorrichtung für einen Antriebsstrang eines Kraftfahrzeugs anzugeben, die auf einfache Art und Weise demontierbar und anschließend wieder montierbar ist.

Erfindungsgemäß gelöst wird diese Aufgabe durch eine Drehmomentübertragungsvorrichtung für einen Antriebsstrang eines Kraftfahrzeugs gemäß Anspruch 1. Bevorzugte Ausführungsbeispiele der vorliegenden Erfindung sind in den abhängigen Ansprüchen dargelegt.

Die Drehmomentübertragungsvorrichtung für einen Antriebsstrang eines Kraftfahrzeugs ist ausgestattet mit einem Eingangselement, das mit einer Kurbelwelle eines Verbrennungsmotors des Kraftfahrzeugs verschraubbar ist, einer dem Eingangselement nachfolgenden Drehmomentbegrenzungseinrichtung und einem nachfolgenden Ausgangselement, das mittels einer formschlüssigen Verbindung drehfest mit der Drehmomentbegrenzungseinrichtung verbunden ist, wobei das Ausgangselement bezüglich der Drehmomentbegrenzungseinrichtung in axialer Richtung der Drehmomentübertragungsvorrichtung durch die Kraft eines Beaufschlagungsmittels, insbesondere einer Feder, in einer ersten Position gehalten ist und entgegen der Kraft des Beaufschlagungsmittels in axialer Richtung verlagerbar ist, wobei das Ausgangselement im Zuge der Verlagerung in axialer Richtung eine zweite Position einnehmen kann, in der die formschlüssige Verbindung weiterhin besteht, und wobei das Ausgangselement im Zuge der Verlagerung in axialer Richtung eine dritte Position einnehmen kann, in der die formschlüssige Verbindung aufgehoben ist und das Ausgangselement bezüglich der Drehmomentbegrenzungseinrichtung verdrehbar ist. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

Vorzugsweise umfasst das Eingangselement eine Drehschwingungsdämpfereinrichtung, insbesondere einen Bogenfederdämpfer, deren Eingangsflansch mit der Kurbelwelle des Verbrennungsmotors verschraubbar ist bzw. verschraubt ist, und deren Ausgangsflansch die Eingangsseite der Drehmomentbegrenzungseinrichtung bildet. Insbesondere ist die Drehschwingungsdämpfereinrichtung, vorzugsweise deren Bogenfedern, in radialer Richtung der Drehmomentübertragungsvorrichtung außerhalb der Drehmomentbegrenzungseinrichtung angeordnet, wobei sich die Drehschwingungsdämpfereinrichtung und die Drehmomentbegrenzungseinrichtung vorzugsweise in axialer Richtung überlappen.

Das Ausgangselement, das mittels der formschlüssigen Verbindung drehfest mit der Drehmomentbegrenzungseinrichtung verbunden ist, umfasst vorzugsweise eine Nabe, die mit einer Ausgangswelle drehfest verbindbar ist bzw. verbunden ist. Bei der Ausgangswelle kann es sich um eine Getriebeeingangswelle oder um eine Zwischenwellen eines hybriden Antriebsstrangs des Kraftfahrzeugs handeln. Vorzugsweise erfolgt die drehfeste Verbindung mittels einer Steckverzahnung.

Hierzu ist die Nabe vorzugsweise mit einer sich in radialer Richtung nach innen erstreckenden Innenverzahnung ausgestattet.

Weiterhin ist es von Vorteil, wenn am Ausgangselement eine Torsionsschwingungstilgereinrichtung, insbesondere eine Fliehkraftpendeleinrichtung, drehfest vorgesehen ist. Hierzu ist vorzugsweise zumindest ein erster Fliehkraftpendelflansch mit der Nabe verbunden. Vorzugsweise handelt es sich bei der Fliehkraftpendeleinrichtung um ein sogenanntes Zwei-Flansch-Pendel, bei dem in Umfangsrichtung verteilt angeordnete Pendelmassen in axialer Richtung zwischen zwei durch Abstandsbolzen voneinander beabstandeten Fliehkraftpendelflanschen über Rollen verschwenkbar angeordnet sind. Während der erste dieser Fliehkraftpendelflansche drehfest mit der Nabe verbunden, vorzugsweise vernietet, ist, ist der zweite dieser Fliehkraftpendelflansche durch die Abstandsbolzen drehfest mit dem ersten Fliehkraftpendelflansch verbunden, vorzugsweise vernietet.

Es ist jedoch auch möglich, dass es sich bei der Fliehkraftpendeleinrichtung um ein sogenanntes Ein-Flansch-Pendel handelt, bei dem in Umfangsrichtung verteilt angeordnete Pendelmassenpaare in axialer Richtung auf beiden Seiten eines einzigen, zentralen Fliehkraftpendelflansches angeordnet sind. Eine erste Masse eines Pendelmassenpaares ist auf der der Eingangsseite der Drehmomentübertragungsvorrichtung zugewandten Seite des Fliehkraftpendelflansches angeordnet, während eine zweite Masse des Pendelmassenpaares auf der der Ausgangsseite der Drehmomentübertragungsvorrichtung zugewandten Seite des Fliehkraftpendelflansches angeordnet ist.

Vorzugsweise weist das Ausgangselement zumindest eine Verschraubungsdurchgriffsöffnung auf, die zur Verschraubung des Eingangselements mit der Kurbelwelle des Verbrennungsmotors mit einer entsprechenden Verschraubungsöffnung im Eingangselement fluchtet. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

Vorzugsweise weist der Eingangsflansch der Drehschwingungsdämpfereinrichtung in Umfangsrichtung verteilt angeordnete Verschraubungsöffnungen auf, durch die der Eingangsflansch mit der Kurbelwelle des Verbrennungsmotors verschraubbar ist. Gleichermaßen weist das Ausgangselement, vorzugsweise die Nabe, auf dem gleichen Radius und in gleicher Anzahl in Umfangsrichtung verteilt angeordnete Verschraubungsdurchgriffsöffnungen auf, die zur Montage der Drehmomentübertragungsvorrichtung an der Kurbelwelle mit den Verschraubungsöffnungen fluchten. Vorzugsweise entspricht der Durchmesser einer Verschraubungsdurchgriffsöffnung zumindest dem Durchmesser der mit ihr fluchtenden Verschraubungsöffnung und ist insbesondere größer als der Durchmesser der mit ihr fluchtenden Verschraubungsöffnung.

Vorzugsweise ist die Drehmomentbegrenzungseinrichtung als Rutschkupplung ausgebildet. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

Vorzugsweise handelt es sich bei der Drehmomentbegrenzungseinrichtung um eine Rutschkupplung mit einer in axialer Richtung ortsfesten Gegendruckplatte und einer durch eine Tellerfeder in axialer Richtung beaufschlagten Anpressplatte. Vorzugsweise ist der Ausgangsflansch der Drehschwingungsdämpfereinrichtung jeweils unter Zwischenlage eines Reibbelags in axialer Richtung zwischen der Gegendruckplatte und der Anpressplatte der Rutschkupplung reibschlüssig geklemmt. Dabei ist es von Vorteil, wenn einer der im Wesentlichen ringförmigen Reibbeläge zumindest in Umfangsrichtung der Drehmomentübertragungsvorrichtung an der Gegendruckplatte festgelegt ist, und ein weiterer der im Wesentlichen ringförmigen Reibbeläge zumindest in Umfangsrichtung an der Anpressplatte festgelegt ist. Ferner weist die Rutschkupplung vorzugsweise eine Seitenplatte auf, die mit der Gegendruckplatte drehfest und in axialer Richtung fest verbunden ist, und die mit der Anpressplatte drehfest verbunden ist. Die Anpressplatte ist in axialer Richtung zwischen der Gegendruckplatte und der Seitenplatte angeordnet. Die Tellerfeder stützt sich an der Seitenplatte ab, um die Anpressplatte in Richtung der Gegendruckplatte gegen der Ausgangsflansch der Drehschwingungsdämpfereinrichtung zu beaufschlagen. Die vorgenannten Platten sind vorzugsweise als Blechteile ausgebildet.

Weiterhin ist es von Vorteil, wenn der Eingangsflansch der Drehschwingungsdämpfereinrichtung eine Zentriereinrichtung aufweist, durch die die Drehmomentbegrenzungseinrichtung zentriert und abgestützt, insbesondere gelagert, ist. Vorzugsweise stützt sich die ringförmige Gegendruckplatte der Rutschkupplung mit ihrem inneren Rand an der in axialer Richtung vom Eingangsflansch vorspringenden Zentriereinrichtung ab. Vorzugsweise ist die Zentriereinrichtung drehfest am Eingangsflansch ausgebildet und weist insbesondere Verschraubungsöffnungen auf, die mit den Verschraubungsöffnungen des Eingangsflanschs fluchten.

Vorzugsweise ist die formschlüssige Verbindung, die eine Verlagerung des Ausgangselements bezüglich der Drehmomentbegrenzungseinrichtung in axialer Richtung ermöglicht, und die zwischen der Drehmomentbegrenzungseinrichtung und dem Ausgangselement angeordnet ist, als Steckverzahnung ausgebildet. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

Hierbei sei angemerkt, dass der Formschluss zumindest in Umfangsrichtung vorliegen muss, um Drehmoment übertragen zu können, und vorzugsweise durch entsprechende Zähne bzw. Zahnflanken der Steckverzahnung ausgebildet ist. D.h. die formschlüssige Verbindung zwischen der Drehmomentbegrenzungseinrichtung und dem Ausgangselement ist zumindest drehfest. Vorzugsweise begrenzt die ringförmige Gegendruckplatte, die sich in radialer Richtung weiter nach innen erstreckt als die mit ihr verbundene Seitenplatte die mögliche Verlagerung des Ausgangselements in axialer Richtung, genauer gesagt in Richtung der Eingangsseite der Drehmomentbegrenzungseinrichtung, indem das Ausgangselement an der Gegendruckplatte zur Anlage kommt. Diese Anlage definiert die erste Position des Ausgangselements.

Es ist von Vorteil, wenn die Feder an einem mit einer Ausgangsseite der Drehmomentbegrenzungseinrichtung drehfest verbundenen Stützring abgestützt ist und gegen einen Flanschabschnitt des Ausgangselements vorgespannt ist, wobei der Flanschabschnitt vorzugsweise auf seinem Außenumfang mit einer Außenverzahnung der Steckverzahnung versehen ist. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

Der Flanschabschnitt stellt vorzugsweise einen in radialer Richtung außen gelegenen Abschnitt der Nabe dar. Die Außenverzahnung am Außenumfang des Flanschabschnitts befindet sich im Eingriff mit einer entsprechenden Innenverzahnung, die vorzugsweise am Innenumfang der ringförmigen Seitenplatte der Rutschkupplung ausgebildet ist. Es sei angemerkt, dass zumindest im Bereich der Steckverzahnung die Dicke des Flanschabschnitts in axialer Richtung vorzugsweise größer ist als die Dicke der Seitenplatte in axialer Richtung. Ferner sei angemerkt, dass im Bereich der Steckverzahnung die Dicke des Flanschabschnitts in axialer Richtung vorzugsweise kleiner ist als die gemeinsame Dicke der Seitenplatte und des Stützrings in axialer Richtung. Durch diese bevorzugte Ausgestaltung ist es möglich, dass in der zweiten Position des Ausgangselements, wenn das Ausgangselement nicht mehr an der Gegendruckplatte anliegt, die formschlüssige Verbindung zwischen der Drehmomentbegrenzungseinrichtung und dem Ausgangselement bzw. dem Flanschabschnitt der Nabe weiter besteht.

Erfindungsgemäß ist die Feder, durch die das Ausgangselement in axialer Richtung bezüglich der Drehmomentbegrenzungseinrichtung in der ersten Position gehalten ist, als Tellerfeder ausgebildet. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

Die Tellerfeder liegt vorzugsweise in ihrem Innenbereich am Flanschabschnitt der Nabe und in ihrem Außenbereich am Stützring an. In der ersten Position des Ausgangselements weist die Tellerfeder vorzugsweise eine konische Form auf, während sie in der zweiten Position des Ausgangselements flach ist, und vorzugsweise in ihrem Innenbereich flächig auf der zur Ausgangsseite der Drehmomentübertragungsvorrichtung weisenden Oberfläche des Flanschabschnitts der Nabe aufliegt.

Erfindungsgemäß ist die Tellerfeder in Umfangsrichtung der Drehmomentübertragungsvorrichtung begrenzt verdrehbar bezüglich der Drehmomentbegrenzungseinrichtung, vorzugsweise begrenzt verdrehbar durch den Stützring gehalten. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

Vorzugsweise bildet die Tellerfeder eine Art federvorbelasteter Bajonettverschluss. Hierdurch wird verhindert, dass die in Umfangsrichtung formschlüssige bzw. drehfeste Verbindung zwischen der Drehmomentbegrenzungseinrichtung und dem Ausgangselement in axialer Richtung ausschließlich durch die Kraft der Tellerfeder im Sinne einer Vorspannung aufrechterhalten wird. Vielmehr sorgt der Bajonettverschluss auch für einen Formschluss in axialer Richtung in der zweiten Position des Ausgangselements, der verhindert, dass die drehfeste Verbindung zwischen der Drehmomentbegrenzungseinrichtung und dem Ausgangselement ohne zusätzliche Maßnahmen aufgehoben werden kann.

Vorzugsweise begrenzt die Tellerfeder in einer Ausgangslage die Verlagerung des Ausgangselements in axialer Richtung in der zweiten Position räumlich, wobei die Tellerfeder in einer bezüglich der Ausgangslage verdrehten Verdrehlage die räumliche Begrenzung freigibt und die Verlagerung des Ausgangselements in axialer Richtung in die dritte Position ermöglicht. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

Die räumliche Begrenzung entspricht einem Formschluss in axialer Richtung, indem vorzugsweise die flach gedrückte Tellerfeder eine weitere Entfernung des Flanschabschnitts der Nabe von der Gegendruckplatte verhindert.

Es ist von Vorteil, wenn die Tellerfeder, vorzugsweise in ihrem Außenumfang, lange Tellerfederzungen und kurze Tellerfederzungen aufweist, wobei die Tellerfeder durch ihre langen Tellerfederzungen sowohl in der Ausgangslage als auch in der Verdrehlage am Stützring abgestützt ist, und wobei die Tellerfeder durch ihre kurzen Tellerfederzungen in der Ausgangslage am Stützring, vorzugsweise an sich in radialer Richtung der Drehmomentübertragungsvorrichtung nach innen erstreckenden Vorsprüngen des Stützrings, abgestützt ist, um eine Verlagerung der Tellerfeder in axialer Richtung derart zu begrenzen, dass die Tellerfeder die Verlagerung des Ausgangselements über die zweite Position hinaus räumlich begrenzt, und wobei sich die kurzen Tellerfederzungen in der Verdrehlage der Tellerfeder nicht mehr am Stützring, vorzugsweise an den sich in radialer Richtung nach innen erstreckenden Vorsprüngen, abstützen, um eine Verlagerung der Tellerfeder in axialer Richtung derart zu ermöglichen, dass die Tellerfeder die Verlagerung des Ausgangselements in die dritte Position räumlich freigibt. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

In der dritten Position ist die Tellerfeder entweder immer noch flach gedrückt und zusätzlich in Gänze zusammen mit dem Flanschabschnitts der Nabe in axialer Richtung etwas weiter als in der zweiten Position von der Eingangsseite der Drehmomentübertragungsvorrichtung wegbewegt, oder die Tellerfeder hat eine - im Vergleich zur ersten Position - umgekehrt konische Form angenommen. In beiden Fällen kann der Verzahnungseingriff, der vorzugsweise durch die Innenverzahnung am Innenumfang der ringförmigen Seitenplatte der Rutschkupplung und durch die Außenverzahnung am Außenumfang des Flanschabschnitts der Nabe ausgebildet ist, aufgehoben werden.

Weiterhin ist es von Vorteil, wenn am Ausgangselement eine Fliehkraftpendeleinrichtung vorgesehen ist, die zumindest einen ersten Fliehkraftpendelflansch aufweist, wobei der erste Fliehkraftpendelflansch auf dem Radius der Tellerfeder eine Öffnung, vorzugsweise in Form eines Langlochs, aufweist, durch die ein Werkzeug zur Verdrehung der Tellerfeder einführbar ist. Dadurch kann insbesondere die Kurbelwellenverschraubung zugänglich gemacht werden, nachdem die Drehmomentbegrenzungseinrichtung im Betrieb des Kraftfahrzeugs infolge einer Drehmomentspitze ausgelöst hat, was die Demontierbarkeit und anschließende Montierbarkeit der Drehmomentübertragungsvorrichtung begünstigt.

Vorzugsweise ist es dabei möglich, die Tellerfeder mittels ihrer langen oder kurzen Tellerfederzungen zu verdrehen.

Ferner ist die Fliehkraftpendeleinrichtung vorzugsweise ausgestattet mit zumindest einem um eine Drehachse drehbaren ersten Fliehkraftpendelflansch, zumindest einer Pendelmasse, die zur Tilgung von Drehungleichförmigkeiten verlagerbar am ersten Fliehkraftpendelflansch aufgehängt ist, und zumindest einer Nabe, die drehfest mit dem ersten Fliehkraftpendelflansch verbunden ist, wobei die Nabe einen Verbindungsabschnitt aufweist, der bezüglich der Drehachse in einem Radiusbereich angeordnet ist, der sich mit dem Radiusbereich überlappt, in dem die Pendelmasse angeordnet ist, und der zur Verbindung mit der Drehmomentübertragungsvorrichtung ausgebildet ist, und wobei der erste Fliehkraftpendelflansch eine erste Werkzeugdurchgriffsöffnung aufweist, die in dem Radiusbereich des Verbindungsabschnitts im ersten Fliehkraftpendelflansch ausgebildet ist. Dadurch ist die Zugänglichkeit des Verbindungsabschnitts durch den Fliehkraftpendelflansch hindurch gewährleistet, was die Montierbarkeit und Demontierbarkeit der Fliehkraftpendeleinrichtung begünstigt.

Der Verbindungsabschnitt kann einteilig mit der Nabe ausgebildet sein, kann aber auch als separates Bauteil ausgebildet sein, dessen räumliche Beziehung mit der Nabe erst während der Vorbereitung der Verbindung mit der Drehmomentübertragungsvorrichtung oder während des eigentlichen Verbindungsvorgangs endgültig festgelegt wird.

Die Nabe ist mit einer Ausgangswelle drehfest verbindbar bzw. verbunden. Bei der Ausgangswelle kann es sich um eine Getriebeeingangswelle oder um eine Zwischenwellen eines hybriden Antriebsstrangs des Kraftfahrzeugs handeln. Vorzugsweise erfolgt die drehfeste Verbindung mittels einer Steckverzahnung. Hierzu ist die Nabe vorzugsweise mit einer sich in radialer Richtung der Fliehkraftpendeleinrichtung nach innen erstreckenden Innenverzahnung ausgestattet.

Vorzugsweise weist der Fliehkraftpendelflansch zusätzliche Zentrieröffnungen auf, die zum Ausrichten der Fliehkraftpendeleinrichtung bei der Montage verwendet werden können.

Vorzugsweise weist der Verbindungsabschnitt eine Verbindungsöffnung auf, die mit der ersten Werkzeugdurchgriffsöffnung in axialer Richtung der Fliehkraftpendeleinrichtung fluchtet. Dadurch ist die Zugänglichkeit des Verbindungsabschnitts durch den Fliehkraftpendelflansch hindurch gewährleistet, was die Montierbarkeit und Demontierbarkeit der Fliehkraftpendeleinrichtung begünstigt.

Fluchten bedeutet in diesem Zusammenhang, dass man ein Werkzeug, beispielsweise ein Verschraubungswerkzeug oder ein Nietwerkzeug, in die erste Werkzeugdurchgriffsöffnung einführen kann, und mit diesem Werkzeug ein Verbindungsmittel einbringen kann oder in der Verbindungsöffnung im Zuge der Montage mit der Drehmomentübertragungsvorrichtung verbinden kann, beispielsweise verschrauben oder vernieten kann. Dies bedeutet, dass die erste Werkzeugdurchgriffsöffnung üblicherweise größer als die Verbindungsöffnung ist. Insbesondere bedeutet fluchten daher, dass, in axialer Richtung der Fliehkraftpendeleinrichtung betrachtet, die Verbindungsöffnung vollständig innerhalb der Umrandung der ersten Werkzeugdurchgriffsöffnung liegt. So ist es beispielsweise möglich, dass zwei Verbindungsöffnungen innerhalb der Umrandung einer einzelnen ersten Werkzeugdurchgriffsöffnung liegen und mit dieser fluchten.

Die Konturen bzw. Geometrien der beiden Öffnungen können unterschiedlich sein. Vorzugsweise ist die Verbindungsöffnung kreisförmig ausgebildet, während die erste Werkzeugdurchgriffsöffnung zumindest kreisförmige Konturabschnitte aufweist, insbesondere auch vollständig kreisförmig ausgebildet ist. Insbesondere ist es von Vorteil, wenn die erste Werkzeugdurchgriffsöffnung einen, ggf. gedachten oder interpolierten, Durchmesser aufweist, der mindestens 11mm größer als der Durchmesser der Verbindungsöffnung ausgebildet ist.

Es ist von Vorteil, wenn der Verbindungsabschnitt als nicht mit der Nabe fest verbundener Stützring ausgebildet ist, dessen Verbindungsöffnung erst mit der ersten Werkzeugdurchgriffsöffnung in axialer Richtung fluchtet, wenn die Fliehkraftpendeleinrichtung mit der Drehmomentübertragungsvorrichtung erfolgt. Dadurch ist die Zugänglichkeit des Verbindungsabschnitts durch den Fliehkraftpendelflansch hindurch gewährleistet, was die Montierbarkeit der Fliehkraftpendeleinrichtung begünstigt.

Beispielsweise ist der Stützring lose, insbesondere verdrehbar, auf die Nabe aufgeschoben bzw. durch die Nabe zentriert. Gleichermaßen kann der Stützring durch ein weiteres Bauteil, beispielsweise durch eine Tellerfeder, mittelbar kraftschlüssig bezüglich der Nabe ausgerichtet sein, so dass der Stützring während der Vorbereitung der Verbindung mit der Drehmomentübertragungsvorrichtung noch bezüglich der Nabe verdreht werden kann. Eine formschlüssige oder stoffschlüssige Verbindung mit der Nabe liegt vorzugsweise nicht vor. Der Stützring kann in axialer Richtung zu den Verbindungsöffnungen versetzte Abstützabschnitte aufweisen, die der Abstützung der Tellerfeder in axialer Richtung dienen. Diese Abstützabschnitte können in radialer Richtung nach innen vorspringende Vorsprünge, insbesondere zur Ausbildung eines Bajonettverschlusses mit der Tellerfeder, aufweisen.

Vorzugsweise ist die Verbindungsöffnung stanztechnisch hergestellt, und vorzugsweise ist ein Stanzeinzug auf der der übrigen, bereits vormontierten Drehmomentübertragungsvorrichtung bei der Montage zugewandten Seite bzw. auf der dem ersten Fliehkraftpendelflansch abgewandten Seite ausgebildet. Durch den Stanzeinzug wird das Einführen des Verbindungsmittels aus Richtung der Drehmomentübertragungsvorrichtung vereinfacht, was die Montierbarkeit der Fliehkraftpendeleinrichtung begünstigt.

Dementsprechend ist ein Stanzgrat vorzugsweise auf der Seite ausgebildet, die dem ersten Fliehkraftpendelflansch zugewandt ist. Bei dem Stützring handelt es sich vorzugsweise um ein Blechbauteil, während es sich bei der Nabe vorzugsweise um ein Schmiede- oder Blechbauteil handelt.

Vorzugsweise verdeckt die Pendelmasse die erste Werkzeugdurchgriffsöffnung bei einer Verlagerung ihres Schwerpunkts in radialer Richtung der Fliehkraftpendeleinrichtung nach innen zumindest teilweise. Umgekehrt ist es von Vorteil, wenn die Werkzeugdurchgriffsöffnung frei ist, wenn der Schwerpunkt der Pendelmasse in radialer Richtung maximal nach außen verlagert ist, was die Montierbarkeit und Demontierbarkeit der Fliehkraftpendeleinrichtung begünstigt.

Vorzugsweise sind mehrere Werkzeugdurchgriffsöffnungen in Umfangsrichtung der Fliehkraftpendeleinrichtung verteilt, vorzugsweise auf demselben Radius und/oder gleichmäßig beabstandet, im ersten Fliehkraftpendelflansch ausgebildet, was die Montierbarkeit und Demontierbarkeit der Fliehkraftpendeleinrichtung begünstigt.

Insbesondere ist es von Vorteil, wenn jeweils eine erste Werkzeugdurchgriffsöffnungen in Umfangsrichtung zwischen zwei benachbarten Pendelmassen angeordnet ist. Insbesondere ist es von Vorteil, wenn drei Pendelmassen am ersten Fliehkraftpendelflansch aufgehängt sind, und diese Pendelmassen gleichmäßig in Umfangsrichtung verteilt, d.h. um 120° zueinander versetzt, angeordnet sind.

Es ist von Vorteil, wenn ein zweiter Fliehkraftpendelflansch parallel versetzt zum ersten Fliehkraftpendelflansch angeordnet ist, wobei der zweite Fliehkraftpendelflansch eine zweite Werkzeugdurchgriffsöffnung aufweist, die mit der ersten Werkzeugdurchgriffsöffnung in axialer Richtung der Fliehkraftpendeleinrichtung fluchtet, und wobei die Pendelmasse zwischen den beiden Fliehkraftpendelflanschen verlagerbar aufgehängt ist. Durch die fluchtenden Werkzeugdurchgriffsöffnungen wird die Montierbarkeit und Demontierbarkeit der Fliehkraftpendeleinrichtung begünstigt.

Die vorangegangenen Erläuterungen zur ersten Werkzeugdurchgriffsöffnung treffen gleichermaßen auf die zweite Werkzeugdurchgriffsöffnung zu. Vorzugsweise weist der erste Fliehkraftpendelflansch in seinem Außenumfang einen Berstschutz für die Pendelmassen auf, während der zweite Fliehkraftpendelflansch in seinem Außenumfang über Wuchtmöglichkeiten verfügt, vorzugsweise über Wuchtlöcher und ggf. darin eingebrachte Wuchtniete, um die Fliehkraftpendeleinrichtung separat von der restlichen Drehmomentübertragungsvorrichtung zu wuchten.

Vorzugsweise ist der zweite Fliehkraftpendelflansch drehfest an den ersten Fliehkraftpendelflansch angebunden. Dadurch ist die Zugänglichkeit des Verbindungsabschnitts durch den Fliehkraftpendelflansch hindurch gewährleistet, was die Montierbarkeit und Demontierbarkeit der Fliehkraftpendeleinrichtung begünstigt.

Es ist von Vorteil, wenn Abstandsbolzen, vorzugsweise im Bereich der Werkzeugdurchgriffsöffnungen, den ersten Fliehkraftpendelflansch mit dem zweiten Fliehkraftpendelflansch verbinden. Dadurch ist die Zugänglichkeit des Verbindungsabschnitts durch den Fliehkraftpendelflansch hindurch gewährleistet, was die Montierbarkeit und Demontierbarkeit der Fliehkraftpendeleinrichtung begünstigt.

Vorzugsweise bilden die Abstandsbolzen Anschläge zur Begrenzung des Schwingwinkels der Pendelmasse. Dadurch ist die Zugänglichkeit des Verbindungsabschnitts durch den Fliehkraftpendelflansch hindurch gewährleistet, was die Montierbarkeit und Demontierbarkeit der Fliehkraftpendeleinrichtung begünstigt.

Ferner ist die Drehmomentübertragungsvorrichtung für einen Antriebsstrang eines Kraftfahrzeugs mit einer eingangsseitigen Drehschwingungsdämpfereinrichtung, einer nachfolgenden Drehmomentbegrenzungseinrichtung und einer nachfolgenden Fliehkraftpendeleinrichtung nach einem der vorangegangenen Ausführungsbeispiele ausgestattet, deren Verbindungsabschnitt mit einer Ausgangsseite der Drehmomentbegrenzungseinrichtung drehfest verbunden ist, vorzugsweise durch in die Verbindungsöffnungen des Stützrings eingebrachte Stützringniete vernietet ist. Dadurch ist die Zugänglichkeit des Verbindungsabschnitts durch den Fliehkraftpendelflansch hindurch gewährleistet, was die Montierbarkeit und Demontierbarkeit der Fliehkraftpendeleinrichtung begünstigt.

Die vorliegende Erfindung wird nachfolgend anhand von bevorzugten Ausführungsbeispielen in Verbindung mit den zugehörigen Figuren näher erläutert. In diesen zeigen:
- Fig. 1: ein Ausführungsbeispiel einer Drehmomentübertragungsvorrichtung, bei der eine Fliehkraftpendeleinrichtung noch nicht montiert ist bzw. bei der die Fliehkraftpendeleinrichtung demontiert ist, in einer perspektivischen Ansicht;
- Fig. 2: eine halbe Schnittansicht der Drehmomentübertragungsvorrichtung mit montierter Fliehkraftpendeleinrichtung;
- Fig. 3: eine Draufsicht der Fliehkraftpendeleinrichtung ohne Stützring, im oberen Bereich mit zweitem Fliehkraftpendelflansch, im unteren Bereich ohne zweiten Fliehkraftpendelflansch;
- Fig. 4: eine Draufsicht der Fliehkraftpendeleinrichtung mit Stützring und mit diesem auf der Eingangsseite verbundener Drehmomentbegrenzungseinrichtung;
- Fig. 5a: eine halbe Schnittansicht der Drehmomentübertragungsvorrichtung mit montierter Fliehkraftpendeleinrichtung, deren Ausgangselement in einer ersten Position ist;
- Fig. 5b: eine Detailansicht der Drehmomentübertragungsvorrichtung mit montierter Fliehkraftpendeleinrichtung, deren Ausgangselement in einer zweiten Position ist;
- Fig. 5c: eine halbe Schnittansicht der Drehmomentübertragungsvorrichtung mit montierter Fliehkraftpendeleinrichtung, deren Ausgangselement in der zweiten Position ist;
- Fig. 5d: eine Draufsicht auf die Drehmomentübertragungsvorrichtung mit montierter Fliehkraftpendeleinrichtung, deren Tellerfeder in einer Ausgangslage ist;
- Fig. 6a: eine halbe Schnittansicht der Drehmomentübertragungsvorrichtung mit montierter Fliehkraftpendeleinrichtung, deren Ausgangselement in der ersten Position ist, identisch mit Fig. 5a;
- Fig. 6b: eine Detailansicht der Drehmomentübertragungsvorrichtung mit montierter Fliehkraftpendeleinrichtung, deren Ausgangselement in einer dritten Position ist;
- Fig. 6c: eine halbe Schnittansicht der Drehmomentübertragungsvorrichtung mit montierter Fliehkraftpendeleinrichtung, deren Ausgangselement in der dritten Position ist;
- Fig. 6d: eine Draufsicht auf die Drehmomentübertragungsvorrichtung mit montierter Fliehkraftpendeleinrichtung, deren Tellerfeder in einer Verdrehlage ist;
- Fig. 7a: eine Draufsicht auf die Drehmomentübertragungsvorrichtung mit montierter Fliehkraftpendeleinrichtung;
- Fig. 7b: eine Detailansicht aus Fig. 7a mit der Tellerfeder in der Ausgangslage; und
- Fig. 7c: eine Detailansicht aus Fig. 7a mit der Tellerfeder in der Verdrehlage.

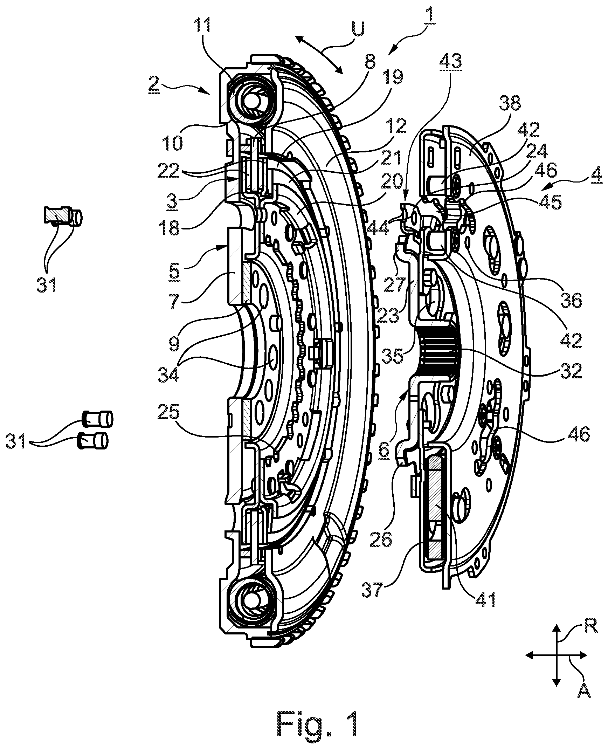

In den Figuren 1 bis 7c ist ein Ausführungsbeispiel einer Fliehkraftpendeleinrichtung 4 für eine Drehmomentübertragungsvorrichtung 1, sowie einer Drehmomentübertragungsvorrichtung 1 mit einer Drehschwingungsdämpfereinrichtung 2, einer Drehmomentbegrenzungseinrichtung 3 und einer Fliehkraftpendeleinrichtung 4 für einen Antriebsstrang eines Kraftfahrzeugs dargestellt. Merkmale, die in der nachfolgenden Beschreibung nicht als erfindungswesentlich beschrieben sind, sind als optional zu verstehen.

In den Figuren 1 bis 7c ist ein Ausführungsbeispiel einer Fliehkraftpendeleinrichtung 4 für eine Drehmomentübertragungsvorrichtung 1, sowie einer Drehmomentübertragungsvorrichtung 1 mit einer Drehschwingungsdämpfereinrichtung 2, einer Drehmomentbegrenzungseinrichtung 3 und einer Torsionsschwingungstilgereinrichtung, insbesondere der besagten Fliehkraftpendeleinrichtung 4, für einen Antriebsstrang eines Kraftfahrzeugs dargestellt. Merkmale, die in der nachfolgenden Beschreibung nicht als erfindungswesentlich beschrieben sind, sind als optional zu verstehen.

Die Drehmomentübertragungsvorrichtung 1 weist ein Eingangselement 5 auf, das mit einer Kurbelwelle eines Verbrennungsmotors eines Kraftfahrzeugs verschraubbar ist bzw. verschraubt ist. Ferner weist die Drehmomentübertragungsvorrichtung 1 ein Ausgangselement 6 auf, das mit einer Ausgangswelle drehfest verbindbar ist bzw. verbunden ist. Bei der Ausgangswelle kann es sich um eine Getriebeeingangswelle oder um eine Zwischenwellen eines hybriden Antriebsstrangs des Kraftfahrzeugs handeln.

Das Eingangselement 5 umfasst im dargestellten Ausführungsbeispiel die Drehschwingungsdämpfereinrichtung 2, die insbesondere als Bogenfederdämpfer ausgebildet ist, deren Eingangsflansch 7 mit der Kurbelwelle des Verbrennungsmotors verschraubbar ist bzw. verschraubt ist. Ein Ausgangsflansch 8 der Drehschwingungsdämpfereinrichtung 2 bildet eine Eingangsseite 39 der Drehmomentbegrenzungseinrichtung 3. Insbesondere ist die Drehschwingungsdämpfereinrichtung 2, vorzugsweise deren Bogenfedern 11, in radialer Richtung R der Drehmomentübertragungsvorrichtung 1 außerhalb der Drehmomentbegrenzungseinrichtung 3 angeordnet, wobei sich die Drehschwingungsdämpfereinrichtung 2 und die Drehmomentbegrenzungseinrichtung 3 vorzugsweise in axialer Richtung A der Drehmomentübertragungsvorrichtung 1 überlappen. Die Bogenfedern 11 sind in einem Federkanal 10, vorzugsweise in einer Gleitschale, geführt, der vom Eingangsflansch 7 und einer Deckscheibe 12 gebildet ist. Ferner ist am Eingangsflansch 7 eine Zentriereinrichtung 9 vorgesehen, durch die die Drehmomentbegrenzungseinrichtung 3 zentriert und abgestützt, insbesondere gelagert, ist.

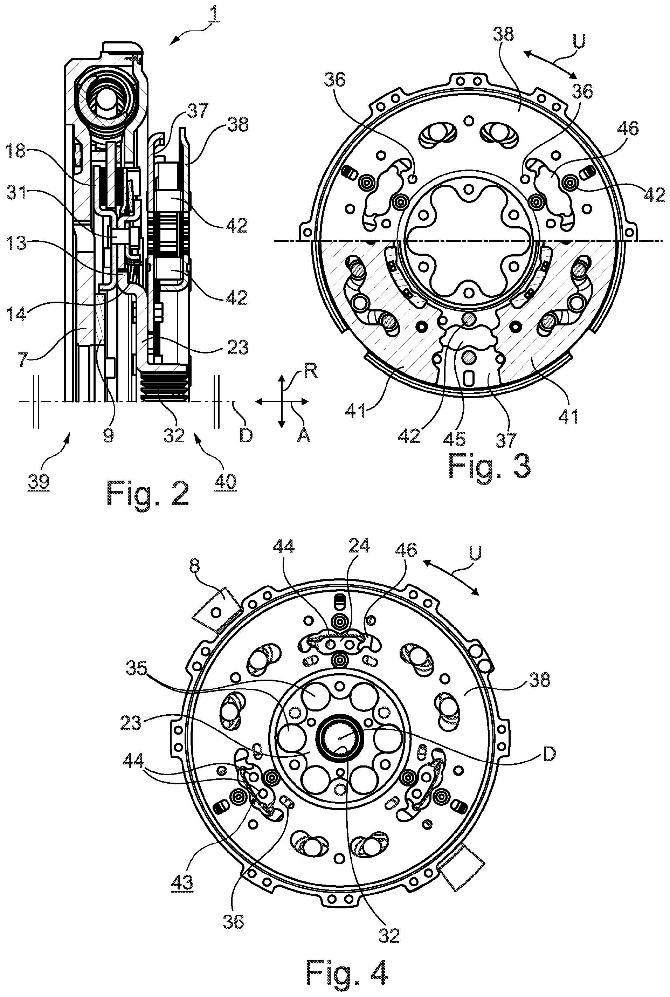

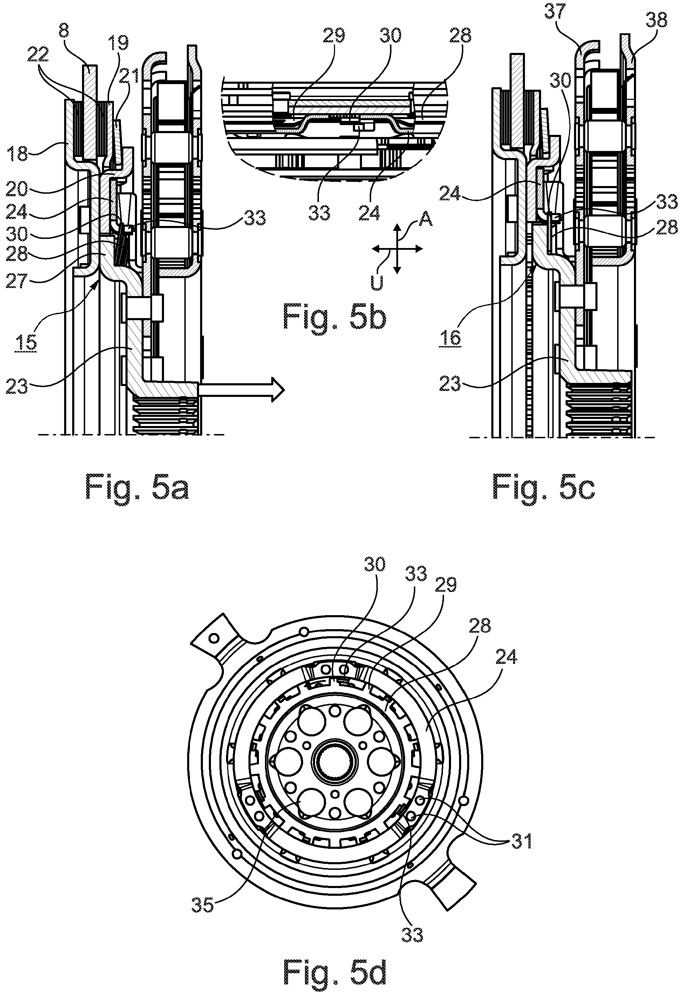

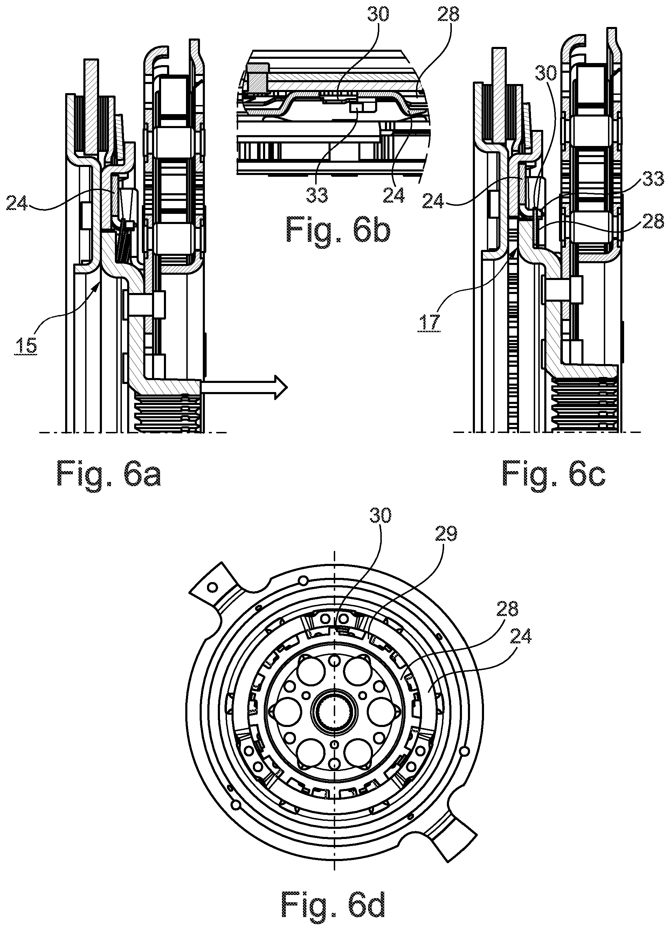

Das Ausgangselement 6 ist mittels einer formschlüssigen Verbindung 13 drehfest mit der Drehmomentbegrenzungseinrichtung 3 verbunden, wobei das Ausgangselement 6 bezüglich der Drehmomentbegrenzungseinrichtung 3 in axialer Richtung A durch die Kraft eines Beaufschlagungsmittels 14, insbesondere einer Feder, in einer ersten Position 15 gehalten ist, wie dies insbesondere in den Figuren 2, 5a und 6a dargestellt ist, und entgegen der Kraft des Beaufschlagungsmittels 14 in axialer Richtung A verlagerbar ist, wie dies insbesondere in den Figuren 5b, 5c, 6b und 6c dargestellt ist. Das Ausgangselement 6 kann im Zuge der Verlagerung in axialer Richtung A eine zweite Position 16 einnehmen, die in den Figuren 5b und 5b dargestellt ist, in der die formschlüssige Verbindung 13 weiterhin besteht. Ferner kann das Ausgangselement 6 im Zuge der Verlagerung in axialer Richtung A eine dritte Position 17 einnehmen, die in den Figuren 6b und 6c dargestellt ist, in der die formschlüssige Verbindung 13 aufgehoben ist und das Ausgangselement 6 bezüglich der Drehmomentbegrenzungseinrichtung 3 verdrehbar ist.

Das Ausgangselement 6 umfasst eine Nabe 23, die mit einer Ausgangswelle drehfest verbindbar ist bzw. verbunden ist. Im dargestellten Ausführungsbeispiel erfolgt die drehfeste Verbindung mittels einer Steckverzahnung. Hierzu ist die Nabe 23 mit einer sich in radialer Richtung R nach innen erstreckenden Innenverzahnung 32 ausgestattet.

Ein erster Fliehkraftpendelflansch 37 der Fliehkraftpendeleinrichtung 4 ist drehfest mit der Nabe 23 verbunden. Im dargestellten Ausführungsbeispiel handelt es sich bei der Fliehkraftpendeleinrichtung 4 um ein sogenanntes Zwei-Flansch-Pendel, bei dem in Umfangsrichtung U der der Drehmomentübertragungsvorrichtung 1 verteilt angeordnete Pendelmassen 41 in axialer Richtung A zwischen zwei durch Abstandsbolzen 42 voneinander beabstandeten Fliehkraftpendelflanschen 37, 38 über Rollen verschwenkbar angeordnet sind. Während der erste dieser Fliehkraftpendelflansche 37 drehfest mit der Nabe 23 verbunden, vorzugsweise vernietet, ist, ist der zweite dieser Fliehkraftpendelflansche 38 durch die Abstandsbolzen 42 drehfest mit dem ersten Fliehkraftpendelflansch 37 verbunden, vorzugsweise vernietet.

Das Ausgangselement 6 weist zumindest eine Verschraubungsdurchgriffsöffnung 35 auf, die zur Verschraubung des Eingangselements 5 mit der Kurbelwelle des Verbrennungsmotors mit einer entsprechenden Verschraubungsöffnung 34 im Eingangselement 5 fluchtet. Insbesondere weist der Eingangsflansch 7 der Drehschwingungsdämpfereinrichtung 2 in Umfangsrichtung U verteilt angeordnete Verschraubungsöffnungen 34 auf, durch die der Eingangsflansch 7 mit der Kurbelwelle des Verbrennungsmotors verschraubbar ist. Gleichermaßen weist das Ausgangselement 6, insbesondere die Nabe 23, auf dem gleichen Radius und in gleicher Anzahl in Umfangsrichtung U verteilt angeordnete Verschraubungsdurchgriffsöffnungen 35 auf, die zur Montage der Drehmomentübertragungsvorrichtung 1 an der Kurbelwelle mit den Verschraubungsöffnungen 34 fluchten. Vorzugsweise entspricht der Durchmesser einer Verschraubungsdurchgriffsöffnung 35 zumindest dem Durchmesser der mit ihr fluchtenden Verschraubungsöffnung 34 und ist insbesondere größer als der Durchmesser der mit ihr fluchtenden Verschraubungsöffnung 34.

Bei der Drehmomentbegrenzungseinrichtung 3 handelt es sich im dargestellten Ausführungsbeispiel um eine Rutschkupplung mit einer in axialer Richtung A ortsfesten Gegendruckplatte 18 und einer durch eine Tellerfeder 21 in axialer Richtung A beaufschlagten Anpressplatte 19. Der Ausgangsflansch 8 der Drehschwingungsdämpfereinrichtung 2 ist jeweils unter Zwischenlage eines Reibbelags 22 in axialer Richtung A zwischen der Gegendruckplatte 18 und der Anpressplatte 19 der Rutschkupplung reibschlüssig geklemmt. Einer der im Wesentlichen ringförmigen Reibbeläge 22 ist zumindest in Umfangsrichtung an der Gegendruckplatte 18 festgelegt, und ein weiterer der im Wesentlichen ringförmigen Reibbeläge 22 ist zumindest in Umfangsrichtung U an der Anpressplatte 19 festgelegt.

Ferner weist die Rutschkupplung eine Seitenplatte 20 auf, die mit der Gegendruckplatte 18 drehfest und in axialer Richtung A fest verbunden ist, und die mit der Anpressplatte 19 drehfest verbunden ist. Die Anpressplatte 19 ist in axialer Richtung A zwischen der Gegendruckplatte 18 und der Seitenplatte 20 angeordnet. Die Tellerfeder 21 stützt sich an der Seitenplatte 20 ab, um die Anpressplatte 19 in Richtung der Gegendruckplatte 18 gegen der Ausgangsflansch 8 der Drehschwingungsdämpfereinrichtung 2 zu beaufschlagen. Die vorgenannten Platten 18, 19, 20 sind vorzugsweise als Blechteile ausgebildet.

Im dargestellten Ausführungsbeispiel stützt sich die ringförmige Gegendruckplatte 18 der Rutschkupplung mit ihrem inneren Rand an der in axialer Richtung A vom Eingangsflansch 7 vorspringenden Zentriereinrichtung 9 ab. Die Zentriereinrichtung 9 ist drehfest am Eingangsflansch 7 ausgebildet und weist insbesondere Verschraubungsöffnungen 34 auf, die mit den Verschraubungsöffnungen 34 des Eingangsflanschs 7 fluchten.

Die formschlüssige Verbindung 13, die eine Verlagerung des Ausgangselements 6 bezüglich der Drehmomentbegrenzungseinrichtung 3 in axialer Richtung A ermöglicht, und die zwischen der Drehmomentbegrenzungseinrichtung 3 und dem Ausgangselement 6 angeordnet ist, ist als Steckverzahnung ausgebildet. Hierbei sei angemerkt, dass der Formschluss zumindest in Umfangsrichtung U vorliegen muss, um Drehmoment übertragen zu können, und vorzugsweise durch entsprechende Zähne bzw. Zahnflanken der Steckverzahnung ausgebildet ist. D.h. die formschlüssige Verbindung 13 zwischen der Drehmomentbegrenzungseinrichtung 3 und dem Ausgangselement 6 ist zumindest drehfest.

Im dargestellten Ausführungsbeispiel, wie insbesondere aus den Figuren 2, 5a und 6a ersichtlich, begrenzt die ringförmige Gegendruckplatte 18, die sich in radialer Richtung R weiter nach innen erstreckt als die mit ihr verbundene Seitenplatte 20 die mögliche Verlagerung des Ausgangselements 6 in axialer Richtung A nach links, genauer gesagt in Richtung der Eingangsseite 39 der Drehmomentbegrenzungseinrichtung 3, indem das Ausgangselement 6 an der Gegendruckplatte 18 zur Anlage kommt. Diese Anlage definiert die erste Position 15 des Ausgangselements 6.

Die Feder ist an einem mit einer Ausgangsseite 40 der Drehmomentbegrenzungseinrichtung 3 drehfest verbundenen Stützring 24 abgestützt und gegen einen Flanschabschnitt 27 des Ausgangselements 6 vorgespannt. Der Flanschabschnitt 27 ist auf seinem Außenumfang mit einer Außenverzahnung 26 der Steckverzahnung versehen. Der Flanschabschnitt 27 stellt insbesondere einen in radialer Richtung R außen gelegenen Abschnitt der Nabe 23 dar. Die Außenverzahnung 26 am Außenumfang des Flanschabschnitts 27 befindet sich im Eingriff mit einer entsprechenden Innenverzahnung 25, die am Innenumfang der ringförmigen Seitenplatte 20 der Rutschkupplung ausgebildet ist.

Es sei angemerkt, dass zumindest im Bereich der Steckverzahnung die Dicke des Flanschabschnitts 27 in axialer Richtung A vorzugsweise größer ist als die Dicke der Seitenplatte 20 in axialer Richtung A. Ferner sei angemerkt, dass im Bereich der Steckverzahnung die Dicke des Flanschabschnitts 27 in axialer Richtung A vorzugsweise kleiner ist als die gemeinsame Dicke der Seitenplatte 20 und des Stützrings 24 in axialer Richtung A. Durch diese Ausgestaltung ist es möglich, dass in der zweiten Position 16 des Ausgangselements 6, wenn das Ausgangselement 6 nicht mehr an der Gegendruckplatte 18 anliegt (siehe Figur 5c), die formschlüssige Verbindung 13 zwischen der Drehmomentbegrenzungseinrichtung 3 und dem Ausgangselement 6 bzw. dem Flanschabschnitt 27 der Nabe 23 weiter besteht.

Die Feder, durch die das Ausgangselement 6 in axialer Richtung A bezüglich der Drehmomentbegrenzungseinrichtung 3 in der ersten Position 15 gehalten ist, ist als Tellerfeder 28 ausgebildet. Die Tellerfeder 28 liegt in ihrem Innenbereich am Flanschabschnitt 27 der Nabe 23 und in ihrem Außenbereich am Stützring 24 an. In der ersten Position 15 des Ausgangselements 6 weist die Tellerfeder 28 eine konische Form auf (siehe Figuren 5a und 6a), während sie in der zweiten Position 16 des Ausgangselements 6 flach ist, und insbesondere in ihrem Innenbereich flächig auf der zur Ausgangsseite 40 der Drehmomentübertragungsvorrichtung 1 weisenden, mit Bezug auf Figur 5c rechten, Oberfläche des Flanschabschnitts 27 der Nabe 23 aufliegt.

Die Tellerfeder 28 ist in Umfangsrichtung U begrenzt verdrehbar bezüglich der Drehmomentbegrenzungseinrichtung 3 durch den Stützring 24 gehalten. Insbesondere bildet die Tellerfeder 28 eine Art federvorbelasteter Bajonettverschluss. Hierdurch wird verhindert, dass die in Umfangsrichtung U formschlüssige bzw. drehfeste Verbindung zwischen der Drehmomentbegrenzungseinrichtung 3 und dem Ausgangselement 6 in axialer Richtung A ausschließlich durch die Kraft der Tellerfeder 28 im Sinne einer Vorspannung aufrechterhalten wird. Vielmehr sorgt der Bajonettverschluss auch für einen Formschluss in axialer Richtung A in der zweiten Position 16 des Ausgangselements 6 (siehe Figuren 5b und 5c), der verhindert, dass die drehfeste Verbindung zwischen der Drehmomentbegrenzungseinrichtung 3 und dem Ausgangselement 6 ohne zusätzliche Maßnahmen aufgehoben werden kann.

Die Tellerfeder 28 begrenzt in einer Ausgangslage, die in Figur 5d dargestellt ist, die Verlagerung des Ausgangselements 6 in axialer Richtung A in der zweiten Position 16 räumlich. Die räumliche Begrenzung entspricht einem Formschluss in axialer Richtung A, indem die flach gedrückte Tellerfeder 28 eine weitere Entfernung des Flanschabschnitts 27 der Nabe 23 von der Gegendruckplatte 18 mit Bezug auf Figur 5c nach rechts verhindert. In einer bezüglich der Ausgangslage verdrehten Verdrehlage, die in Figur 6d dargestellt ist und ausgehend von Figur 5d durch Verdrehung in Pfeilrichtung erreicht wird, gibt die Tellerfeder 28 die räumliche Begrenzung frei und ermöglicht die Verlagerung des Ausgangselements 6 in axialer Richtung A in die dritte Position (siehe Figuren 6b und 6c).

Die Tellerfeder 28 weist in ihrem Außenumfang lange Tellerfederzungen 29 und kurze Tellerfederzungen 30 auf. Die Tellerfeder 28 ist durch ihre langen Tellerfederzungen 29 sowohl in der Ausgangslage als auch in der Verdrehlage am Stützring 24 abgestützt. Die Tellerfeder 28 ist durch ihre kurzen Tellerfederzungen 30 in der Ausgangslage am Stützring 24, insbesondere an sich in radialer Richtung R nach innen erstreckenden Vorsprüngen 33 des Stützrings 24, abgestützt, um eine Verlagerung der Tellerfeder 28 in axialer Richtung A derart zu begrenzen, dass die Tellerfeder 28 die Verlagerung des Ausgangselements 6 über die zweite Position 16 hinaus räumlich begrenzt (siehe Figuren 5b und 5c). Die kurzen Tellerfederzungen 29 stützen sich in der Verdrehlage der Tellerfeder 28 nicht mehr am Stützring 24, insbesondere an den sich in radialer Richtung R nach innen erstreckenden Vorsprüngen 33, ab, um eine Verlagerung der Tellerfeder 28 in axialer Richtung A derart zu ermöglichen, dass die Tellerfeder 28 die Verlagerung des Ausgangselements 6 in die dritte Position 17 räumlich freigibt (siehe Figuren 6b und 6c), wodurch die Fliehkraftpendeleinrichtung 4 bezüglich der restlichen Drehmomentübertragungsvorrichtung 1 soweit verdreht werden kann, bis die durch das Auslösen der Drehmomentbegrenzungseinrichtung 3 während des Betriebs des Kraftfahrzeugs nicht mehr fluchtenden Verschraubungsöffnungen 34 und Verschraubungsdurchgriffsöffnungen 35 wieder fluchten, wodurch die Kurbelwellenverschraubung mittels eines entsprechenden Werkzeugs gelöst werden kann und die komplette Drehmomentübertragungsvorrichtung 1 von der Kurbelwelle abgenommen werden kann.

Im dargestellten Ausführungsbeispiel zentriert der mit der Gegendruckplatte 18 und der Seitenplatte 20 mittels Stützringniete 31 vernietete Stützring 24 das in die dritte Position 17 verlagerte Ausgangselement 6 bzw. die in die dritte Position 17 verlagerte Fliehkraftpendeleinrichtung 4 über seinen inneren Rand, vorzugsweise über in axialer Richtung A vorspringende Abstützabschnitte, die gleichzeitig der Abstützung der Tellerfeder 28 in axialer Richtung A dienen.

In der dritten Position 17 ist die Tellerfeder 28 entweder immer noch flach gedrückt und zusätzlich in Gänze zusammen mit dem Flanschabschnitts 27 der Nabe 23 in axialer Richtung A etwas weiter als in der zweiten Position 16 von der Eingangsseite 39 der Drehmomentübertragungsvorrichtung 1 wegbewegt, oder die Tellerfeder 28 hat eine - im Vergleich zur ersten Position 15 - umgekehrt konische Form angenommen. In beiden Fällen kann der Verzahnungseingriff, der durch die Innenverzahnung 25 am Innenumfang der ringförmigen Seitenplatte 20 der Rutschkupplung und durch die Außenverzahnung 26 am Außenumfang des Flanschabschnitts 27 der Nabe 26 ausgebildet ist, aufgehoben werden.

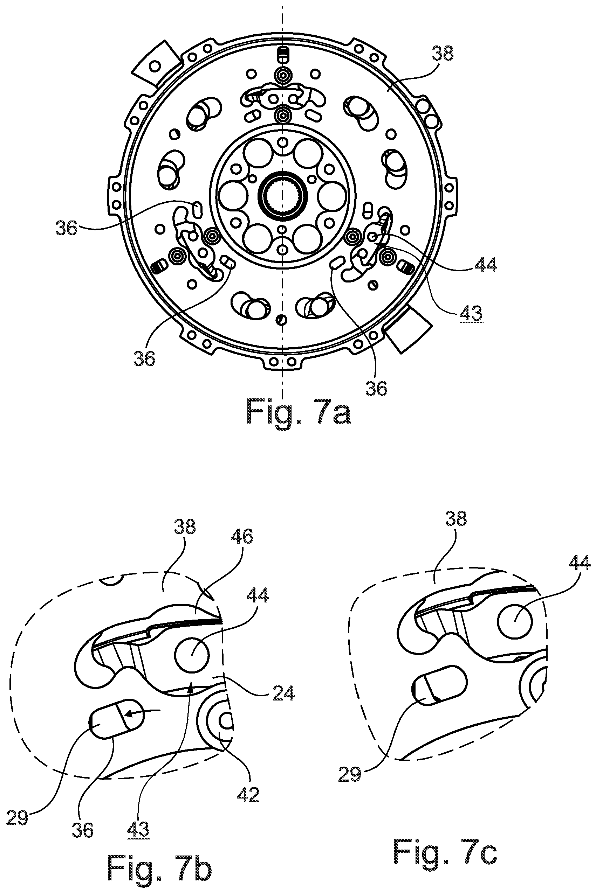

Um die Tellerfeder 28 von außen zu verdrehen, weist der erste Fliehkraftpendelflansch 37, insbesondere weisen beide Fliehkraftpendelflansche 37, 38, auf dem Radius der Tellerfeder 28 eine Öffnung, vorzugsweise in Form eines Langlochs 36, auf, durch die ein Werkzeug zur Verdrehung der Tellerfeder 28 einführbar ist. Vorzugsweise ist es dabei möglich, die Tellerfeder 28 mittels ihrer langen oder kurzen Tellerfederzungen 29, 30 zu verdrehen, wie dies in den Figuren 7a bis 7c dargestellt ist.

Insbesondere mit Bezug auf die Figuren 1 bis 4 wird nachfolgend die Montage der Fliehkraftpendeleinrichtung 4 an der restlichen, im vom Verbrennungsmotor kommenden Drehmomentpfad vorgelagerten, Drehmomentübertragungsvorrichtung 1 beschrieben.

Wie bereits zuvor ansatzweise beschrieben, weist die Fliehkraftpendeleinrichtung 4 zumindest einen um eine Drehachse D der Fliehkraftpendeleinrichtung 4 bzw. der Drehmomentübertragungsvorrichtung 1 drehbaren ersten Fliehkraftpendelflansch 37 auf. Die zumindest eine Pendelmasse 41 ist zur Tilgung von Drehungleichförmigkeiten verlagerbar am ersten Fliehkraftpendelflansch 37 aufgehängt. Die Nabe 23 ist drehfest mit dem ersten Fliehkraftpendelflansch 37 verbunden und weist einen Verbindungsabschnitt 43 auf, der bezüglich der Drehachse D in einem Radiusbereich angeordnet ist, der sich mit dem Radiusbereich überlappt, in dem die Pendelmasse 41 angeordnet ist. Der Verbindungsabschnitt 43 ist ferner zur Verbindung mit der Drehmomentübertragungsvorrichtung 1 ausgebildet ist. Der Verbindungsabschnitt 43 kann einteilig mit der Nabe 23 ausgebildet sein, kann aber auch als separates Bauteil ausgebildet sein, dessen räumliche Beziehung mit der Nabe 23 erst während der Vorbereitung der Verbindung mit der Drehmomentübertragungsvorrichtung 1 oder während des eigentlichen Verbindungsvorgangs endgültig festgelegt wird.

Der erste Fliehkraftpendelflansch 37 weist eine erste Werkzeugdurchgriffsöffnung 45 auf, die in dem Radiusbereich des Verbindungsabschnitts 43 im ersten Fliehkraftpendelflansch 37 ausgebildet ist. Vorzugsweise weist der Fliehkraftpendelflansch 37 zusätzliche Zentrieröffnungen auf, die zum Ausrichten der Fliehkraftpendeleinrichtung 4 bei der Montage verwendet werden können.

Der Verbindungsabschnitt 43 weist eine Verbindungsöffnung 44 auf, die mit der ersten Werkzeugdurchgriffsöffnung 45 in axialer Richtung A der Fliehkraftpendeleinrichtung 4 fluchtet. Fluchten bedeutet in diesem Zusammenhang, dass man ein Werkzeug, beispielsweise ein Verschraubungswerkzeug oder ein Nietwerkzeug, in die erste Werkzeugdurchgriffsöffnung 45 einführen kann, und mit diesem Werkzeug ein Verbindungsmittel einbringen kann oder in der Verbindungsöffnung 44 im Zuge der Montage mit der Drehmomentübertragungsvorrichtung 1 verbinden kann, beispielsweise verschrauben oder vernieten kann. Dies bedeutet, dass die erste Werkzeugdurchgriffsöffnung 45 üblicherweise größer als die Verbindungsöffnung 44 ist. Insbesondere bedeutet fluchten daher, dass, in axialer Richtung A der Fliehkraftpendeleinrichtung 4 betrachtet, die Verbindungsöffnung 44 vollständig innerhalb der Umrandung der ersten Werkzeugdurchgriffsöffnung 45 liegt. So ist es beispielsweise möglich, dass zwei Verbindungsöffnungen 44 innerhalb der Umrandung einer einzelnen ersten Werkzeugdurchgriffsöffnung 45 liegen und mit dieser fluchten.

Die Konturen bzw. Geometrien der beiden Öffnungen können unterschiedlich sein. Vorzugsweise ist die Verbindungsöffnung 44 kreisförmig ausgebildet, während die erste Werkzeugdurchgriffsöffnung 45 zumindest kreisförmige Konturabschnitte aufweist, insbesondere auch vollständig kreisförmig ausgebildet ist. Insbesondere ist es von Vorteil, wenn die erste Werkzeugdurchgriffsöffnung 45 einen, ggf. gedachten oder interpolierten, Durchmesser aufweist, der mindestens 11mm größer als der Durchmesser der Verbindungsöffnung 44 ausgebildet ist.

Im dargestellten Ausführungsbeispiel ist der Verbindungsabschnitt 43 als nicht mit der Nabe 23 fest verbundener Stützring 24 ausgebildet, dessen Verbindungsöffnung 44 erst mit der ersten Werkzeugdurchgriffsöffnung 45 dauerhaft in axialer Richtung A fluchtet, wenn die Fliehkraftpendeleinrichtung 4 mit der Drehmomentübertragungsvorrichtung 1 erfolgt. Beispielsweise ist der Stützring 24 lose, insbesondere verdrehbar, auf die Nabe 23 aufgeschoben bzw. durch die Nabe 23 zentriert. Gleichermaßen kann der Stützring 24 durch ein weiteres Bauteil, beispielsweise durch eine Tellerfeder 28, mittelbar kraftschlüssig bezüglich der Nabe 23 ausgerichtet sein, so dass der Stützring 24 während der Vorbereitung der Verbindung mit der Drehmomentübertragungsvorrichtung 1 noch bezüglich der Nabe 23 verdreht werden kann. Eine formschlüssige oder stoffschlüssige Verbindung mit der Nabe 23 liegt vorzugsweise nicht vor. Der Stützring 24 kann in axialer Richtung A zu den Verbindungsöffnungen 44 versetzte Abstützabschnitte aufweisen, die der Abstützung der Tellerfeder 28 in axialer Richtung A dienen. Diese Abstützabschnitte können die in radialer Richtung R nach innen vorspringende Vorsprünge 33, insbesondere zur Ausbildung des Bajonettverschlusses mit der Tellerfeder 28, aufweisen.

Bei der Montage wird der Verbindungsabschnitt 43 mit der Ausgangsseite 40 der Drehmomentbegrenzungseinrichtung 3 drehfest verbunden, vorzugsweise durch in die Verbindungsöffnungen 44 des Stützrings 24 eingebrachte Stützringniete 31 vernietet. Die Verbindungsöffnungen 44 im Stützring 24 sind, vorzugsweise zusammen mit dem gesamten Stützring 24, stanztechnisch hergestellt. Ein Stanzeinzug ist auf der dem ersten Fliehkraftpendelflansch 37 abgewandten Seite, d.h. mit Bezug auf Figur 1 auf der linken Seite, ausgebildet. Dementsprechend ist ein Stanzgrat auf der dem ersten Fliehkraftpendelflansch 37 zugewandten Seite, d.h. mit Bezug auf Figur 1 auf der rechten Seite, ausgebildet. Bei dem Stützring 24 handelt es sich vorzugsweise um ein Blechbauteil, während es sich bei der Nabe 23 vorzugsweise um ein Schmiede- oder Blechbauteil handelt.

Die Pendelmasse 41 verdeckt die erste Werkzeugdurchgriffsöffnung 45 bei einer Verlagerung ihres Schwerpunkts in radialer Richtung R der Fliehkraftpendeleinrichtung 4 nach innen zumindest teilweise. Mehrere Werkzeugdurchgriffsöffnungen 45 sind in Umfangsrichtung U der Fliehkraftpendeleinrichtung 4 verteilt, vorzugsweise auf demselben Radius und/oder gleichmäßig beabstandet, im ersten Fliehkraftpendelflansch 37 ausgebildet. Jeweils eine erste Werkzeugdurchgriffsöffnungen 45 ist in Umfangsrichtung U zwischen zwei benachbarten Pendelmassen 41 angeordnet. Insbesondere sind drei Pendelmassen 41 am ersten Fliehkraftpendelflansch 37 aufgehängt sind, wobei diese Pendelmassen 41 gleichmäßig in Umfangsrichtung U verteilt, d.h. um 120° zueinander versetzt, angeordnet sind.

Im dargestellten Ausführungsbeispiel ist der zweiter Fliehkraftpendelflansch 38 parallel versetzt zum ersten Fliehkraftpendelflansch 37 angeordnet. Der zweite Fliehkraftpendelflansch 38 drehfest an den ersten Fliehkraftpendelflansch 37 angebunden. Der zweite Fliehkraftpendelflansch 38 weist eine zweite Werkzeugdurchgriffsöffnung 46 auf, die mit der ersten Werkzeugdurchgriffsöffnung 45 in axialer Richtung A der Fliehkraftpendeleinrichtung 4 fluchtet. Die Pendelmasse 41 ist bzw. die Pendelmassen 41 sind zwischen den beiden Fliehkraftpendelflanschen 37, 38 verlagerbar aufgehängt. Die vorangegangenen Erläuterungen zur ersten Werkzeugdurchgriffsöffnung 45 treffen gleichermaßen auf die zweite Werkzeugdurchgriffsöffnung 46 zu.

Vorzugsweise weist der erste Fliehkraftpendelflansch 37 in seinem Außenumfang einen Berstschutz für die Pendelmassen 41 auf, während der zweite Fliehkraftpendelflansch 38 in seinem Außenumfang über Wuchtmöglichkeiten verfügt, vorzugsweise über Wuchtlöcher und ggf. darin eingebrachte Wuchtniete, um die Fliehkraftpendeleinrichtung 4 separat von der restlichen Drehmomentübertragungsvorrichtung 1 zu wuchten.

Die Abstandsbolzen 42 verbinden, vorzugsweise im Bereich der Werkzeugdurchgriffsöffnungen 45, 46, den ersten Fliehkraftpendelflansch 37 mit dem zweiten Fliehkraftpendelflansch 38. Insbesondere bilden die Abstandsbolzen 42 Anschläge zur Begrenzung des Schwingwinkels der Pendelmasse 41.

Das vorangegangene Ausführungsbeispiel betrifft eine Drehmomentübertragungsvorrichtung 1 für einen Antriebsstrang eines Kraftfahrzeugs, mit einem Eingangselement 5, das mit einer Kurbelwelle eines Verbrennungsmotors des Kraftfahrzeugs verschraubbar ist, einer dem Eingangselement 5 nachfolgenden Drehmomentbegrenzungseinrichtung 3 und einem nachfolgenden Ausgangselement 6, das mittels einer formschlüssigen Verbindung 13 drehfest mit der Drehmomentbegrenzungseinrichtung 3 verbunden ist, wobei das Ausgangselement 6 bezüglich der Drehmomentbegrenzungseinrichtung 3 in axialer Richtung A der Drehmomentübertragungsvorrichtung 1 durch die Kraft eines Beaufschlagungsmittels 14, insbesondere einer Feder, in einer ersten Position 15 gehalten ist und entgegen der Kraft des Beaufschlagungsmittels 14 in axialer Richtung A verlagerbar ist, wobei das Ausgangselement 6 im Zuge der Verlagerung in axialer Richtung A eine zweite Position 16 einnehmen kann, in der die formschlüssige Verbindung 13 weiterhin besteht, und wobei das Ausgangselement 6 im Zuge der Verlagerung in axialer Richtung A eine dritte Position 17 einnehmen kann, in der die formschlüssige Verbindung 13 aufgehoben ist und das Ausgangselement 6 bezüglich der Drehmomentbegrenzungseinrichtung 3 verdrehbar ist.

### Bezugszeichenliste

- 1: Drehmomentübertragungsvorrichtung
- 2: Drehschwingungsdämpfereinrichtung
- 3: Drehmomentbegrenzungseinrichtung
- 4: Fliehkraftpendeleinrichtung
- 5: Eingangselement
- 6: Ausgangselement
- 7: Eingangsflansch
- 8: Ausgangsflansch
- 9: Zentriereinrichtung
- 10: Federkanal
- 11: Bogenfeder
- 12: Deckscheibe
- 13: formschlüssige Verbindung
- 14: Beaufschlagungsmittel
- 15: erste Position
- 16: zweite Position
- 17: dritte Position
- 18: Gegendruckplatte
- 19: Anpressplatte
- 20: Seitenplatte
- 21: Tellerfeder
- 22: Reibbelag
- 23: Nabe
- 24: Stützring
- 25: Innenverzahnung
- 26: Außenverzahnung
- 27: Flanschabschnitt
- 28: Tellerfeder
- 29: lange Tellerfederzunge
- 30: kurze Tellerfederzunge
- 31: Stützringniet
- 32: Innenverzahnung
- 33: Vorsprung
- 34: Verschraubungsöffnung
- 35: Verschraubungsdurchgriffsöffnung
- 36: Langloch
- 37: erster Fliehkraftpendelflansch
- 38: zweiter Fliehkraftpendelflansch
- 39: Eingangsseite
- 40: Ausgangsseite
- 41: Pendelmasse
- 42: Abstandsbolzen
- 43: Verbindungsabschnitt
- 44: Verbindungsöffnung
- 45: erste Werkzeugdurchgriffsöffnung
- 46: zweite Werkzeugdurchgriffsöffnung

- A: axiale Richtung
- R: radiale Richtung
- U: Umfangsrichtung
- D: Drehachse

## Patentansprüche

1. Drehmomentübertragungsvorrichtung (1) für einen Antriebsstrang eines Kraftfahrzeugs, mit einem Eingangselement (5), das mit einer Kurbelwelle eines Verbrennungsmotors des Kraftfahrzeugs verschraubbar ist, einer dem Eingangselement (5) nachfolgenden Drehmomentbegrenzungseinrichtung (3) und einem nachfolgenden Ausgangselement (6), das mittels einer formschlüssigen Verbindung (13) drehfest mit der Drehmomentbegrenzungseinrichtung (3) verbunden ist, wobei das Ausgangselement (6) bezüglich der Drehmomentbegrenzungseinrichtung (3) in axialer Richtung (A) der Drehmomentübertragungsvorrichtung (1) durch die Kraft eines als Tellerfeder (28) ausgebildeten Beaufschlagungsmittels (14) in einer ersten Position (15) gehalten ist und entgegen der Kraft der Tellerfeder (28) in axialer Richtung (A) verlagerbar ist, wobei das Ausgangselement (6) im Zuge der Verlagerung in axialer Richtung (A) eine zweite Position (16) einnehmen kann, in der die formschlüssige Verbindung (13) weiterhin besteht, und wobei das Ausgangselement (6) im Zuge der Verlagerung in axialer Richtung (A) eine dritte Position (17) einnehmen kann, in der die formschlüssige Verbindung (13) aufgehoben ist und das Ausgangselement (6) bezüglich der Drehmomentbegrenzungseinrichtung (3) verdrehbar ist, **dadurch gekennzeichnet, dass** die Tellerfeder (28) in Umfangsrichtung (U) der Drehmomentübertragungsvorrichtung (1) begrenzt verdrehbar bezüglich der Drehmomentbegrenzungseinrichtung (3) ist.

2. Drehmomentübertragungsvorrichtung (1) nach Anspruch 1, wobei das Ausgangselement (6) zumindest eine Verschraubungsdurchgriffsöffnung (35) aufweist, die zur Verschraubung des Eingangselements (5) mit der Kurbelwelle des Verbrennungsmotors mit einer entsprechenden Verschraubungsöffnung (34) im Eingangselement (5) fluchtet.

3. Drehmomentübertragungsvorrichtung (1) nach Anspruch 1 oder 2, wobei die Drehmomentbegrenzungseinrichtung (3) als Rutschkupplung ausgebildet ist.

4. Drehmomentübertragungsvorrichtung (1) nach einem der Ansprüche 1 bis 3, wobei die formschlüssige Verbindung (13), die eine Verlagerung des Ausgangselements (6) bezüglich der Drehmomentbegrenzungseinrichtung (3) in axialer Richtung (A) ermöglicht, und die zwischen der Drehmomentbegrenzungseinrichtung (3) und dem Ausgangselement (6) angeordnet ist, als Steckverzahnung ausgebildet ist.

5. Drehmomentübertragungsvorrichtung (1) nach einem der Ansprüche 1 bis 4, wobei die Feder an einem mit einer Ausgangsseite (40) der Drehmomentbegrenzungseinrichtung (3) drehfest verbundenen Stützring (24) abgestützt ist und gegen einen Flanschabschnitt (27) des Ausgangselements (6) vorgespannt ist, wobei der Flanschabschnitt (27) vorzugsweise auf seinem Außenumfang mit einer Außenverzahnung (26) der Steckverzahnung versehen ist.

6. Drehmomentübertragungsvorrichtung (1) nach einem der Ansprüche 1 bis 5, wobei die Tellerfeder (28) in Umfangsrichtung (U) begrenzt verdrehbar durch den Stützring (24) gehalten ist.

7. Drehmomentübertragungsvorrichtung (1) nach einem der Ansprüche 1 bis 6, wobei die Tellerfeder (28) in einer Ausgangslage die Verlagerung des Ausgangselements (6) in axialer Richtung (A) in der zweiten Position (16) räumlich begrenzt, und wobei die Tellerfeder (28) in einer bezüglich der Ausgangslage verdrehten Verdrehlage die räumliche Begrenzung freigibt und die Verlagerung des Ausgangselements (6) in axialer Richtung (A) in die dritte Position (17) ermöglicht.

8. Drehmomentübertragungsvorrichtung (1) nach Anspruch 7, wobei die Tellerfeder (28), vorzugsweise in ihrem Außenumfang, lange Tellerfederzungen (29) und kurze Tellerfederzungen (30) aufweist, wobei die Tellerfeder (28) durch ihre langen Tellerfederzungen (29) sowohl in der Ausgangslage als auch in der Verdrehlage am Stützring (24) abgestützt ist, und wobei die Tellerfeder (28) durch ihre kurzen Tellerfederzungen (30) in der Ausgangslage am Stützring (24), vorzugsweise an sich in radialer Richtung (R) der Drehmomentbegrenzungseinrichtung (3) nach innen erstreckenden Vorsprüngen (33) des Stützrings (24), abgestützt ist, um eine Verlagerung der Tellerfeder (28) in axialer Richtung (A) derart zu begrenzen, dass die Tellerfeder (28) die Verlagerung des Ausgangselements (6) über die zweite Position (16) hinaus räumlich begrenzt, und wobei sich die kurzen Tellerfederzungen (29) in der Verdrehlage der Tellerfeder (28) nicht mehr am Stützring (24), vorzugsweise an den sich in radialer Richtung (R) nach innen erstreckenden Vorsprüngen (33), abstützen, um eine Verlagerung der Tellerfeder (28) in axialer Richtung (A) derart zu ermöglichen, dass die Tellerfeder (28) die Verlagerung des Ausgangselements (6) in die dritte Position (17) räumlich freigibt.

9. Drehmomentübertragungsvorrichtung (1) nach einem der Ansprüche 1 bis 8, wobei am Ausgangselement (6) eine Fliehkraftpendeleinrichtung (4) vorgesehen ist, die zumindest einen ersten Fliehkraftpendelflansch (37) aufweist, wobei der erste Fliehkraftpendelflansch (37) auf dem Radius der Tellerfeder (28) eine Öffnung, vorzugsweise in Form eines Langlochs (36), aufweist, durch die ein Werkzeug zur Verdrehung der Tellerfeder (28) einführbar ist.

## Claims

1. A torque transmission part (1) for a drivetrain of a motor vehicle, comprising an input element (5), which can be screwed to a crankshaft of an internal combustion engine of the motor vehicle, a torque limiting device (3) following the input element (5), and a subsequent output element (6), which is non-rotatably connected to the torque limiting device (3) by means of a positive-locking connection (13), wherein the output element (6), with respect to the torque limiting device (3), is held in the axial direction (A) of the torque transmission part (1) by the force of an actuating means (14) formed as a belleville spring (28) in a first position (15) and is displaceable in the axial direction (A) against the force of the belleville spring (28), wherein the output element (6) can assume a second position (16) during displacement in the axial direction (A), in which the positive-locking connection (13) still exists, and wherein the output element (6) can assume a third position (17) during displacement in the axial direction (A), in which the positive-locking connection (13) is released and the output element (6) is rotatable with respect to the torque limiting device (3),
**characterized in that**
the belleville spring (28) is limitedly rotatable in the circumferential direction (U) of the torque transmission part (1) with respect to the torque limiting device (3).

2. The torque transmission part (1) according to claim 1, wherein the output element (6) has at least one screw access opening (35), which is aligned with a corresponding screw connection opening (34) in the input element (5) for screwing the input element (5) to the crankshaft of the internal combustion engine.

3. The torque transmission part (1) according to claim 1 or 2, wherein the torque limiting device (3) is designed as a slip clutch.

4. The torque transmission part (1) according to any one of claims 1 to 3, wherein the positive-locking connection (13), which enables displacement of the output element (6) with respect to the torque limiting device (3) in the axial direction (A), and which is arranged between the torque limiting device (3) and the output element (6), is designed as a spline.

5. The torque transmission part (1) according to any one of claims 1 to 4, wherein the spring is supported on a support ring (24) non-rotatably connected to an output side (40) of the torque limiting device (3) and is preloaded against a flange section (27) of the output element (6), wherein the flange section (27) is preferably provided on its outer circumference with an external gearing (26) of the spline.

6. The torque transmission part (1) according to any one of claims 1 to 5, wherein the belleville spring (28) is limitedly rotatable in the circumferential direction (U) and is held by the support ring (24).

7. The torque transmission part (1) according to any one of claims 1 to 6, wherein the belleville spring (28) in an initial position spatially limits the displacement of the output element (6) in the axial direction (A) in the second position (16), and wherein the belleville spring (28) in a rotational position twisted with respect to the initial position releases the spatial limitation and enables the displacement of the output element (6) in the axial direction (A) into the third position (17).

8. The torque transmission part (1) according to claim 7, wherein the belleville spring (28), preferably at its outer circumference, has long belleville spring tongues (29) and short belleville spring tongues (30), wherein the belleville spring (28) is supported by its long belleville spring tongues (29) both in the initial position and in the rotational position on the support ring (24), and wherein the belleville spring (28) is supported by its short belleville spring tongues (30) in the initial position on the support ring (24), preferably on protrusions (33) of the support ring (24) extending radially inward (R) of the torque limiting device (3), in order to spatially limit a displacement of the belleville spring (28) in the axial direction (A) such that the belleville spring (28) spatially limits the displacement of the output element (6) beyond the second position (16), and wherein the short belleville spring tongues (29) in the rotational position of the belleville spring (28) are no longer supported on the support ring (24), preferably on the protrusions (33) extending radially inward (R), in order to enable a displacement of the belleville spring (28) in the axial direction (A) such that the belleville spring (28) spatially releases the displacement of the output element (6) into the third position (17).

9. The torque transmission part (1) according to any one of claims 1 to 8, wherein a centrifugal pendulum device (4) is provided on the output element (6), which has at least a first centrifugal pendulum flange (37), wherein the first centrifugal pendulum flange (37) has an opening on the radius of the belleville spring (28), preferably in the form of an elongated hole (36), through which a tool for rotating the belleville spring (28) can be inserted.

## Revendications

1. Un organe de transmission de couple (1) pour une chaîne cinématique d'un véhicule automobile, comprenant un élément d'entrée (5), qui peut être vissé à un vilebrequin d'un moteur à combustion interne du véhicule automobile, un dispositif limiteur de couple (3) suivant l'élément d'entrée (5), et un élément de sortie (6) subséquent, qui est relié de manière non rotative au dispositif limiteur de couple (3) au moyen d'une liaison à verrouillage positif (13), dans lequel l'élément de sortie (6), par rapport au dispositif limiteur de couple (3), est maintenu dans la direction axiale (A) de l'organe de transmission de couple (1) par la force d'un moyen d'actionnement (14) formé comme un ressort à coupelle (28) dans une première position (15) et est déplaçable dans la direction axiale (A) contre la force du ressort à coupelle (28), dans lequel l'élément de sortie (6) peut adopter une deuxième position (16) lors du déplacement dans la direction axiale (A), dans laquelle la liaison à verrouillage positif (13) existe toujours, et dans lequel l'élément de sortie (6) peut adopter une troisième position (17) lors du déplacement dans la direction axiale (A), dans laquelle la liaison à verrouillage positif (13) est libérée et l'élément de sortie (6) est rotatif par rapport au dispositif limiteur de couple (3), **caractérisé en ce que** le ressort à coupelle (28) est de manière limitée rotatif dans la direction circonférentielle (U) de l'organe de transmission de couple (1) par rapport au dispositif limiteur de couple (3).

2. L'organe de transmission de couple (1) selon la revendication 1, dans lequel l'élément de sortie (6) présente au moins une ouverture d'accès à vis (35), qui est alignée avec une ouverture de connexion à vis (34) correspondante dans l'élément d'entrée (5) pour visser l'élément d'entrée (5) au vilebrequin du moteur à combustion interne.

3. L'organe de transmission de couple (1) selon la revendication 1 ou 2, dans lequel le dispositif limiteur de couple (3) est conçu pour être un embrayage à friction.

4. L'organe de transmission de couple (1) selon l'une quelconque des revendications 1 à 3, dans lequel la liaison à verrouillage positif (13), qui permet le déplacement de l'élément de sortie (6) par rapport au dispositif limiteur de couple (3) dans la direction axiale (A), et qui est disposée entre le dispositif limiteur de couple (3) et l'élément de sortie (6), est conçue comme une denture à cannelures.

5. L'organe de transmission de couple (1) selon l'une quelconque des revendications 1 à 4, dans lequel le ressort est supporté sur une bague de support (24) reliée de manière non rotative à un côté d'une sortie (40) du dispositif limiteur de couple (3) et est précontraint contre une section de bride (27) de l'élément de sortie (6), la section de bride (27) étant de préférence pourvue sur sa circonférence extérieure d'une denture extérieure (26) de la denture à cannelures.

6. L'organe de transmission de couple (1) selon l'une quelconque des revendications 1 à 5, dans lequel le ressort à coupelle (28) est de manière limitée rotatif dans la direction circonférentielle (U) et est maintenu par la bague de support (24).

7. L'organe de transmission de couple (1) selon l'une quelconque des revendications 1 à 6, dans lequel le ressort à coupelle (28) dans une position initiale limite spatialement le déplacement de l'élément de sortie (6) dans la direction axiale (A) dans la deuxième position (16), et dans lequel le ressort à coupelle (28) dans une position de rotation tordue par rapport à la position initiale libère la limitation spatiale et permet le déplacement de l'élément de sortie (6) dans la direction axiale (A) vers la troisième position (17).

8. L'organe de transmission de couple (1) selon la revendication 7, dans lequel le ressort à coupelle (28), de préférence à sa circonférence extérieure, présente de longues languettes de ressort à coupelle (29) et de courtes languettes de ressort à coupelle (30), dans lequel le ressort à coupelle (28) est supporté par ses longues languettes de ressort à coupelle (29) à la fois dans la position initiale et dans la position de rotation sur la bague de support (24), et dans lequel le ressort à coupelle (28) est supporté par ses courtes languettes de ressort à coupelle (30) dans la position initiale sur la bague de support (24), de préférence sur des saillies (33) de la bague de support (24) s'étendant radialement vers l'intérieur (R) du dispositif limiteur de couple (3), afin de limiter spatialement un déplacement du ressort à coupelle (28) dans la direction axiale (A) de sorte que le ressort à coupelle (28) limite spatialement le déplacement de l'élément de sortie (6) au-delà de la deuxième position (16), et dans lequel les courtes languettes de ressort à coupelle (29) dans la position de rotation du ressort à coupelle (28) ne sont plus supportées sur la bague de support (24), de préférence sur les saillies (33) s'étendant radialement vers l'intérieur (R), afin de permettre un déplacement du ressort à coupelle (28) dans la direction axiale (A) de sorte que le ressort à coupelle (28) libère spatialement le déplacement de l'élément de sortie (6) vers la troisième position (17).

9. L'organe de transmission de couple (1) selon l'une quelconque des revendications 1 à 8, dans lequel un dispositif pendulaire centrifuge (4) est prévu sur l'élément de sortie (6), qui présente au moins une première bride pendulaire centrifuge (37), la première bride pendulaire centrifuge (37) présentant une ouverture sur le rayon du ressort à coupelle (28), de préférence sous la forme d'un trou oblong (36), à travers laquelle un outil pour faire tourner le ressort à coupelle (28) peut être introduit.
